# EUROPEAN PATENT APPLICATION

(11) **EP 1 624 653 A1**
(43) Date of publication of application: **08.02.2006**
(21) Application number: 05014073.0
(22) Date of filing: 29.06.2005
(51) Int. Cl.: H04M 1/72, H04M 19/04

(54) **Ring tone reproduction method for mobile terminal**

(30) Priority: 06.08.2004 KR 2004062103
(71) Applicant: LG Electronics, Inc., Seoul (KR)
(72) Inventor: Jeong, Hyun-Soo, Seongnam Gyeonggi-Do (KR)
(74) Representative: von Hellfeld, Axel

(57) **Abstract**

A ring tone production method of a mobile terminal for producing a different start point (S20) of a ring tone whenever a call is received (S10). The method comprises producing a ring tone from a specific point in the duration of the ring tone when a call is received by a mobile terminal and storing an interruption point in the duration of the ring tone (S40) at which the production of the ring tone is interrupted (S30).

## Description

### BACKGROUND OF THE INVENTION

### 1. Field of the Invention

The present invention relates to a mobile terminal and, more particularly, to a ring tone production method of a mobile terminal capable of producing a different start point of a ring tone whenever a call is received.

### 2. Description of the Related Art

As mobile communication technology and terminal fabrication techniques have developed, mobile terminals are no longer simple voice communication devices but are now mobile entertainment systems wherein users can view video, listen to music, enjoy the Internet and play mobile games with a mobile terminal.

With the development of a sound chip installed in a mobile terminal, the mobile terminal can produce sounds closely matching the true sounds of musical chords. Because of the sound chip, along with the development of memory for the mobile terminal, a complete piece of music can be stored as a ring tone in the mobile terminal and produced. Due to users' increased interest in the production of ring tones when a call is received, ring tones producing previously-written pieces of music as well as originally-fabricated ring tones have been provided to users.

Generally, a related art ri ng tone pro duction method for a mobile terminal produces a designated ring tone when the mobile terminal receives a call. The ring tone is interrupted when a user answers the call. Due to fear of the caller hanging up, the user must normally answer the call shortly after hearing the ring tone. Therefore, the user can only enjoy the ring tone for a few moments. Unfortunately, in the related art ring tone production method, the mobile terminal can only produce the ring tone from its beginning whenever a call is received by the mobile terminal. Thus, if the user designates a lengthy ring tone, such as a long piece of music or song, the user can only listen to the beginning of the song each time the mobile terminal receives a call. Additionally, the user will tire of listening to the same part of the ring tone repeatedly, and frequently changes the ring tone, thus increasing costs for downloading new ring tones.

### SUMMARY OF THE INVENTION

The present invention is directed to a ring tone production method of a mobile terminal capable of producing a different start point of a ring tone whenever a call is received.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a ring tone production method for a mobile terminal comprising producing a ring tone from a first point in duration of the ring tone when a first call is received by a mobile terminal and storing an interruption point associated with a second point in the duration of the ring tone when the production of the ring tone is interrupted.

In an exemplary embodiment, the first point is a start point of the ring tone. The first point may also be a point at which the ring tone interrupted during a previous call.

In accordance with one aspect of the invention, the interruption point is identified by a ring tone production pointer. Further, the interruption point is stored in a memory, wherein a position of the interruption point is updated in the memory. Moreover, the position of the interruption point is determined by a measure of time.

In accordance with another aspect of the invention, the method further comprises recognizing the interruption point when a second call is received, continuing to produce the ring tone from the interruption point, and storing a second interruption point at which the ring tone is interrupted when the second call is answered.

In accordance with one embodiment, a ring tone production method for a mobile terminal comprises producing a ring tone from a point at which a ring tone production pointer is positioned when a call is received by a mobile terminal, setting the ring tone production pointer at a point where production of the ring tone is interrupted, and storing a position of the ring tone production pointer in a memory when the production of the ring tone is interrupted.

In accordance with one aspect of the invention, the ring tone production pointer is initially positioned at a start point of the ring tone. Also, the ring tone production pointer may be positioned at a point where the ring tone had previously been interrupted. Moreover, the position of the ring tone production pointer is updated in the memory.

In accordance with another aspect of the invention, the position of the ring tone production pointer is determined based on a measure of time. Also, producing the ring tone, setting the ring tone production pointer, and storing the position of the ring tone production pointer are repeatedly performed whenever a call is received by the mobile terminal.

In accordance with a further aspect of the invention, the method further comprises recognizing the position of the ring tone production pointer when a subsequent call is received, continuing to produce the ring tone from the point at which the ring tone production pointer is positioned, and storing a subsequent position of the ring tone production pointer in the memory when the production of the ring tone is interrupted by answering the subsequent call.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

Figure 1 is a sample of a sound source used as a ring tone for a mobile terminal in accordance with one embodiment of the invention.

Figure 2 is a flow chart of a ring tone production method for a mobile terminal in accordance with one embodiment of the invention.

### DETAILED DESCRIPTION OF THE PREFERRED EMBODIMENTS

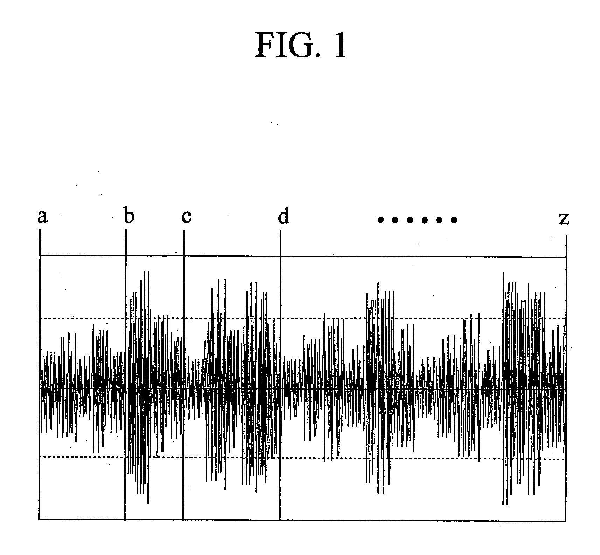

The present invention relates to a ring tone production method of a mobile terminal capable of automatically changing a start point of a ring tone to be produced. Referring to Figure 1, a sound source of a ring tone can be displayed on a graph showing pitches and strengths of a sound. A point shown by 'a' indicates a start point of a ring tone and a point shown by 'z' indicates an end point of the ring tone. In general, a ring tone is produced from point 'a' to point 'z'. After reaching point 'z', production of the ring tone then returns to point 'a' to resume the sound.

In accordance with one embodiment, when a mobile terminal receives a call, a produced ring tone is monitored from a point when a call is first received to a point when a user answers the call. In order to identify the point at which the ring tone is interrupted by the user answering the call, a ring tone production pointer marks the point in the ring tone at which the user answers the call. Accordingly, the position of the pointer is stored in a memory. The position of the pointer may be located by measuring elapsed time such as minutes and seconds. When a subsequent call is received, the position of the pointer stored in the memory is read and the ring tone is produced starting from the point where it had previously been interrupted.

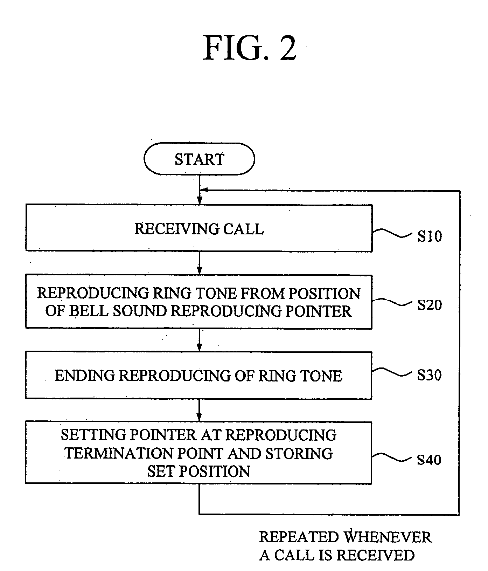

Referring to Figures 1 and 2, a ring tone production method of a mobile terminal in accordance with one embodiment of the invention will be described. When a mobile terminal receives a call (S10), a ring tone is produced starting from a point identified by the ring tone production pointer stored in the memory (S20).

The ring tone production pointer initially points at a previously stored initial value. Preferably, this initial value is the point 'a', the start point of the ring tone, as shown in Figure 1. Thereafter, when the ring tone is interrupted as a user answers the call (S30), the pointer is set at a point at which the production of the ring tone is stopped. Accordingly, the position of the pointer is stored in the memory and the previous position information is updated (S40).

The above actions (S10 ~ S40) are repeated every time a call is received. For example, when a call is first received by the mobile terminal, production of the ring tone starts from the point 'a', the initial value of the position of the pointer. Thereafter, when production of the ring tone is interrupted at the point 'b' as the user answers the call, termination of the produced ring tone and the interruption point are recognized by a processor of the mobile terminal. At this time, a pointer is set for the point 'b' identifying the point at which the ring tone was interrupted. The position of the pointer at point 'b' is then stored in the memory by the processor.

When a call is received a second time, the position of the pointer at point 'b' stored in the memory is read and a ring tone is produced continuing from the point 'b'. When production of the ring tone is interrupted at a point 'c' as the user answers the call, termination of the produced ring tone and the interruption point are recognized by the processor. A pointer is then set for the point 'c' at which the ring tone was interrupted. The position of the pointer at point 'c' is then stored in the memory by the processor. Accordingly, the previously stored position of the pointer at point 'b' is updated by the position of the pointer at point 'c'.

Likewise, when a call is received a third time, the position of the pointer at point 'c' stored in the memory is read and a ring tone is produced from the read point 'c'. When the production of the ring tone is interrupted at a point 'd' as the user answers the call, termination of produced ring tone and the interruption point are recognized by the processor. A pointer is then set for the point 'd' at which the ring tone was interrupted. The position of the pointer at point 'd' is then stored in the memory by the processor. Accordingly, the previously stored position of the pointer at point 'c' is updated by the position of the pointer at point 'd'.

By repeating the method, the position of the ring tone production pointer is continuously updated and stored in the memory and read by the processor. Therefore, whenever a call is received, the position at which the ring tone is produced is changed.

As so far described, the ring tone production method of a mobile terminal has an advantage over the related art. Whenever a call is received, the start point of a ring tone for a present call is continuously advanced to the point when the production ended during the previous call. Thus, a user receiving multiple calls on a mobile terminal does not have to listen to the same section of the ring tone each time a call is received. Moreover, because the user is less inclined to become bored when the user can listen to different starting points of the ring tone production, the user is less inclined to download different ring tones for the mobile terminal. Hence, financial loss of the user due to downloading costs is reduced.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A ring tone production method for a mobile terminal comprising:
producing a ring tone from a first point in duration of the ring tone when a first call is received by a mobile terminal; and
storing an interruption point associated with a second point in the duration of the ring tone when the production of the ring tone is interrupted.

2. The method of claim 1, wherein the first point is a start point of the ring tone.

3. The method of claim 1, wherein the first point is a point at which the ring tone was interrupted during a previous call.

4. The method of claim 1, wherein the interruption point is identified by a ring tone production pointer.

5. The method of claim 1, wherein the interruption point is stored in a memory.

6. The method of claim 5, wherein a position of the interruption point is updated in the memory.

7. The method of claim 6, wherein the position of the interruption point is determined based on a measure of time.

8. The method of claim 1, further comprising:
recognizing the interruption point when a second call is received; and
continuing to produce the ring tone from the interruption point.

9. The method of claim 8, further comprising storing a second interruption point at which the ring tone is interrupted when the second call is answered.

10. A ring tone production method for a mobile terminal comprising:
producing a ring tone from a point at which a ring tone production pointer is positioned when a call is received by a mobile terminal;
setting the ring tone production pointer at a point where production of the ring tone is interrupted; and
storing a position of the ring tone production pointer in a memory when the production of the ring tone is interrupted.

11. The method of claim 10, wherein the ring tone production pointer is initially positioned at a start point of the ring tone.

12. The method of claim 10, wherein the ring tone production pointer is positioned at a point where the ring tone had previously been interrupted.

13. The method of claim 10, wherein the position of the ring tone production pointer is updated in the memory.

14. The method of claim 10, wherein the position of the ring tone production pointer is determined based on a measure of time.

15. The method of claim 10, wherein producing the ring tone, setting the ring tone production pointer, and storing the position of the ring tone production pointer are repeatedly performed whenever a call is received by the mobile terminal.

16. The method of claim 10, further comprising:
recognizing the position of the ring tone production pointer when a subsequent call is received; and
continuing to produce the ring tone from the point at which the ring tone production pointer is positioned.

17. The method of claim 10, further comprising storing a subsequent position of the ring tone production pointer in the memory when the production of the ring tone is interrupted by answering the subsequent call.
